# EUROPEAN PATENT APPLICATION

(11) **EP 1 669 250 A1**
(43) Date of publication of application: **14.06.2006**
(21) Application number: 04106367.8
(22) Date of filing: 07.12.2004
(51) Int. Cl.: B60R 21/01

(54) **Safety system for a vehicle with optical signal transmission**

(71) Applicant: IEE INTERNATIONAL ELECTRONICS & ENGINEERING S.A., 6468 Echternach (LU)
(72) Inventor: Orlewski, Pierre, Dr., 9021, Ettelbruck (LU); Decoster, Yves, 6760, Ethe (BE)
(74) Representative: Beissel, Jean

(57) **Abstract**

A safety system for a vehicle is provided, which comprises signalling means associated with a seat of the vehicle for emitting an optically detectable signal carrying information related to the seat and detecting means for remotely detecting the optically detectable signal and for providing a corresponding signal to a control unit.

## Description

### Introduction

The present invention generally relates to a safety system for a vehicle.

With the increasing effort in making modern cars safer, manufacturers of automotives equip modern vehicle seats with different kinds of sensors and related electronics, such as passenger presence detectors, seat belt buckle sensors, child seat detectors and the like.

Whereas sensors of this kind are already used in front passenger seats, more severe regulations and customer awareness will create a need for providing every seat or bench in a car with specific sensors. Unlike front passenger seats, the rear bench or rear seats are very often foldable, which requires a higher design effort in order to connect the sensors to a control unit remote from the seat or bench.

Furthermore, a great number of cars are nowadays equipped with individually removable seats. These seats can be removed from the passenger compartment as a whole, thus offering the car owner a very high flexibility with regard to what he wishes to transport. Hence, integrating proven solutions known from the front passenger seat, requesting power supply and communication lines, becomes a serious issue.

The manufacturer has several choices. Transferring the responsibility of reconnecting all cables after seat reinstallation to the end user is regarded as inherently unsafe. Another possibility would be providing the seat structure and the ground mounting rails with auto-plug connectors, which is rather expensive. Finally, the communication with sensors and the powering of sensors integrated into the seat can be achieved by "hot" rail technology, which uses wireless inductive powering.

### Object of the invention

The object of the present invention is to provide a different solution for dispatching information related to a vehicle seat to a control unit. This object is achieved by the invention according to claim 1.

### General description of the invention

In order to overcome the abovementioned problems, the present invention provides a safety system for a vehicle comprising signalling means associated with a seat of the vehicle for emitting an optically detectable signal carrying information related to the seat and detecting means for remotely detecting the optically detectable signal and for providing a corresponding signal to a control unit.

The present invention thus uses an optically detectable signal for remotely transmit information from a sensor sensing a relevant seating condition to the control unit. Upon detection of the corresponding signal the control unit can provide information of the seat to the driver. Such remote transmission is not depending on a specific wiring between the seat based sensing system and the control unit arranged at a suitable location in the vehicle, so that problems due to incorrect cabling or defective connectors are no issue with the present invention.

The skilled person will understand that, in order to ensure that the optically detectable signal originating from the signalling means is detectable by the detecting means, the signalling means and the detecting means are suitably arranged in the vehicle. In certain cases, it is favourable if the signalling means is arranged on the headrest or another elevated portion of the seat, so that a passenger occupying the seat cannot shield the signalling means to the detecting means. With the signalling means being arranged on the seat, if the seat is removed from and reinstalled into the vehicle, the safety system according to the present invention is ready for use. There is no need for plugging any cables or establishing a wire connection.

Advantageously, the optically detectable signal is responsive to a sensing device, e.g. a seat belt buckle detector, a passenger presence detector, a child restraint system detector, a folded-seat detector or a combination thereof, transmitted information thus being related to a status detected by the sensing device. Once the detecting means has received the optically detectable signal and provided the corresponding signal to the control unit, the latter disposes of information concerning a sensing device installed in the seat and can submit that information to further treatment if necessary. If a seat belt buckle detector is installed in the seat, the control unit is informed whether the seat belt of that seat is buckled. With a passenger presence detector, the occupation status of the seat is determined. The skilled person will appreciate that combinations of sensing devices are possible. A combination of passenger presence detector and buckle switch detector allows e.g. detecting whether a passenger has not buckled his seat belt. With a child seat sensor, it is further possible to determine the presence and/or the orientation of a child seat arranged on the seating portion of the seat.

According to a preferred embodiment of the present invention, the detecting means comprises a camera, which is arranged within the vehicle so that a field of vision of the camera covers a region containing the signalling means. The camera can be the same camera used in some automotive safety systems for detecting a passenger or an object on the seat or bench. An advantage of the present invention is the fact that cameras for passenger detection have already been developed. Their field of vision naturally covers the seats; the skilled person will therefore find a suitable location for installation of the signalling means.

In a different embodiment, the detecting means comprises a photoelectric cell or a photodiode. The skilled person will be aware of the fact that the signalling means thus should provide an optical signal as optically detectable signal.

Depending on the embodiment of the detecting means, e.g. if the detecting means comprises a camera, the signalling means can comprise a mechanically actuatable device, like a flag or a rotatable wheel. Different positions of the actuatable device correspond to different signals and can be identified on the pictures taken by the camera by means of appropriate software. In a preferred embodiment however, the signalling means comprises a light emitting device, e.g. a lamp, a light emitting diode, a vertical cavity surface emitting laser (VCSEL) or a vertical external cavity surface emitting laser (VECSEL). Several devices can then be used as detecting means, namely a camera or a photoelectric cell.

The safety system can also comprise a plurality of signalling means as well as detecting means, which is useful for transmitting a higher amount of information.

In order to enable bi-directional cornrnunication, the safety system preferably comprises additional detecting means associated with said seat and additional signalling means arranged within the vehicle. The skilled person will appreciate that the operation of the seat based components, e.g. of the signalling means may be initiated by a signal emitted by said additional signalling means and received by said additional detecting means. Bi -directional communication allows the control unit sending a specific request and receiving an answer. An important advantage of this is that it is possible to determine whether a signalling means is shielded to its corresponding detecting means. It is further possible to interrogate the signalling means repeatedly. In the time periods between two subsequent interrogations, the signalling means and the sensing device may be set into a mode with reduced power consumption, which considerably extends the lifetime of a possible battery powering the seat based components, e.g. the signalling means and/or the seat sensor, of the safety system.

It should be noted that there are several possibilities for providing energy to the sensing device and the signalling means arranged on the vehicle seat without laying electrical wires between the board power supply and the seat. It is e.g. possible to install a battery into the seat, which has the disadvantage that it needs periodic replacement, even with elaborate power management. Another solution provides for inductively powering the devices on the seat. In a preferred embodiment, however, the signalling means is powered by collecting light energy. In order to enable light harvesting, a photoelectric cell or any other suitable device, which may also be used as additional detecting means for communicating with the control unit can be arranged on the seat. The signalling means is powered by ambient light or by light, which is dedicatedly directed onto the photoelectric cell by a remote light source. Cameras for passenger detection are commonly equipped with an infrared illumination source, which would be suitable such remote powering.

### Detailed description with respect to the figures

The present invention will be more apparent from the following description of a not limiting embodiment with reference to the attached drawings, wherein
Fig.1: shows a schematic view of a preferred embodiment of the present invention;
Fig.2: shows a schematic view of an embodiment of the present invention allowing bi-directional communication.

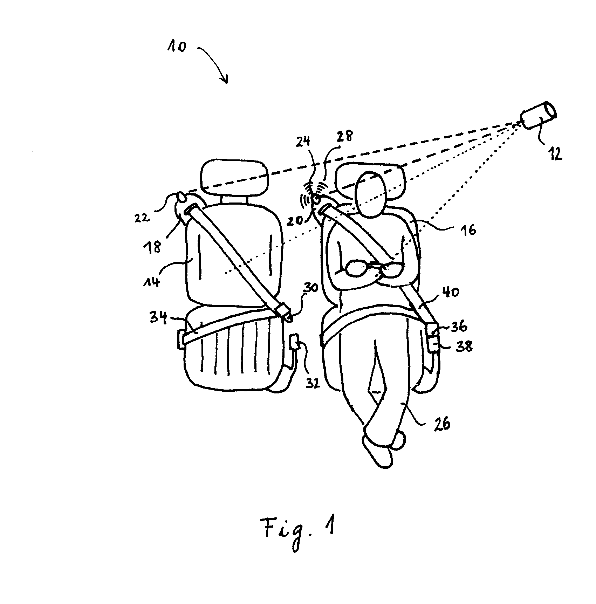

A safety system 10, schematically shown in fig. 1 comprises a camera 12 arranged in the passenger compartment so that it can take pictures of a region covering the two vehicle seats 14, 16. The pictures taken by the camera 12 are analysed for determining the occupation status of the vehicle seats 14, 16. In the shown embodiment, each vehicle seat 14, 16 is equipped with a seat belt feeder 18, 20 wearing a light emitting diode (LED) 22, 24. Thus, the LEDs 22, 24 are arranged so that they are not shielded for the camera 12 in case a passenger 26 occupies the seat 16. Furthermore, the LEDs 22, 24 are electrically connected so that they emit light 28 if and only if the seat belt tongue 30 is correctly latched in the seat belt buckle 32, which is also integrated into the seat 14. As the seat belt 34 of the empty seat 14 is not buckled, the associated LED 22 is not lit, whereas the LED 24 of the seat emits light 28 because the seat belt tongue 36 has been correctly inserted into the seat belt buckle 38 by the passenger 26. By buckling the seat belt 40, the passenger 26 closes an electrical switch, and thus enables powering of the LED 24 e.g. by a battery also integrated into the seat 16. The light 28 emitted by the LED 24 is of a near infrared wavelength, which can be detected by the camera 12. Due to the wavelength, a human eye cannot sense the light 28, which otherwise could give rise to irritation. As a result, the lit LED 24 only appears on the pictures taken by the camera 12 as a bright spot and can be identified by the same image analyser, which detects the passenger 26 on the vehicle seat 16. The seat belt buckle status can thus be obtained for each seat 14, 16 and compared with the occupation status of the respective seat 14, 16.

In case a passenger is detected but the corresponding LED is not lit, a warning signal can be generated, which informs the driver that the passenger is not correctly restraint by his seat belt.

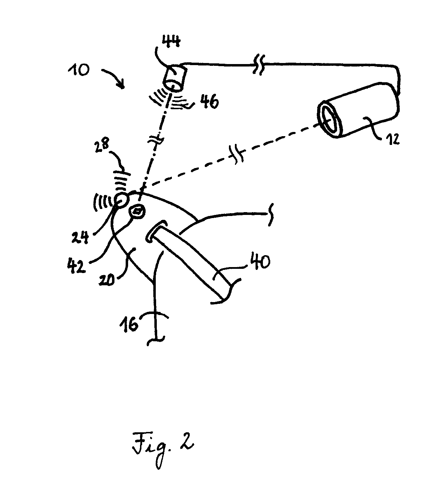

In fig. 2, a photoelectric cell 42 is associated to the LED 24 on the seat belt feeder 20 of the seat 16. The photoelectric cell 42 is arranged so as to intercept infrared light 46 originating from an illumination source 44, which is connected to the camera 12. The infrared light 46 illuminates the scenery for the camera 12 and it also carries optical energy from the illumination source 44 to the photoelectric cell 42. Therein, the optical energy is transformed into electrical energy, which is stored in a storage battery of the associated electric circuit and which is used for powering the LED 24. This eliminates the need for changing an empty battery, which would be a likely source of error, as this duty is conferred to the end user.

The illumination source 44 can further generate a specific light signal by intensity modulation, received by the photoelectric cell 42, for transmitting information to the electric circuit of the seat 16. Upon receiving this information, the electric circuit of the seat 16 can start e.g. service routines, check the storage battery, wake up from a sleep mode, etc. On the other hand, the LED 24 can generate a specific signal detected by the camera 12, said signal indicating a system error or the like.

The embodiment shown in fig. 2 thus enables bi-directional communication. The illumination source 44 sends a light signal to the photoelectric cell 42, which causes the associated electric circuit to wake up from a power saving mode. In order to verify whether there is a line of sight between the LED 24 and the camera 12, the LED 24 emits a detectable status signal indicating if the seat belt 40 is buckled or not. Upon reception of this status signal, the control unit is able to determine that the safety system is operational. If the status signal is not received, the control unit can issue a warning. A warning is also generated if the camera has detected a passenger on the seat but a status signal indicating that the corresponding seat belt is not buckled was received.

### List of reference signs

- 10: safety system
- 12: camera
- 14, 16: vehicle seats
- 18, 20: seat belt feeder
- 22, 24: light emitting diode (LED)
- 26: passenger
- 28: emitted light
- 30, 36: seat belt tongue
- 32,38: seat belt buckle
- 34,40: seat belt
- 42: photoelectric cell
- 44: illumination source
- 46: infrared light

## Claims

1. A safety system for a vehicle comprising signalling means associated with a seat of said vehicle for emitting an optically detectable signal carrying information related to said seat and detecting means for remotely detecting said optically detectable signal and for providing a corresponding signal to a control unit.

2. A safety system according to claim 1, wherein said optically detectable signal is responsive to a sensing device chosen from a group comprising seat belt buckle detector, passenger presence detector, child restraint system detector and folded-seat detector, said information being related to a status detected by said sensing device.

3. A safety system according to claim 1 or 2, wherein said detecting means comprises a camera which is arranged within said vehicle so that a field of vision of said camera covers a region containing said signalling means.

4. A safety system according to any one of the preceding claims, wherein said detecting means comprises a photoelectric cell or a photodiode.

5. A safety system according to any one of the preceding claims, wherein said signalling means comprises a light emitting device.

6. A safety system according to any one of the preceding claims, comprising additional detecting means associated with said seat and additional signalling means arranged within said vehicle, so as to enable bi-directional communication.

7. A safety system according to claim 6, wherein the operation of said signalling means is initiated by a signal emitted by said additional signalling means and received by said additional detecting means.

8. A safety system according to any one of the preceding claims, wherein said signalling means is powered by collecting light energy.
